# EUROPÄISCHE PATENTSCHRIFT

(11) **EP 4 133 924 B1**
(45) Veröffentlichungstag und Bekanntmachung des Hinweises auf die Patenterteilung: **18.12.2024**
(21) Anmeldenummer: 22168327.9
(22) Anmeldetag: 14.04.2022
(51) Int. Cl.: A01B 63/112

(54) **VERFAHREN ZUR REGELUNG EINES HECKKRAFTHEBERS EINER LANDWIRTSCHAFTLICHEN ARBEITSMASCHINE**
METHOD FOR CONTROLLING A REAR POWER LIFTER OF AN AGRICULTURAL MACHINE
PROCÉDÉ DE RÉGLAGE D'UN RELEVAGE ARRIÈRE D'UNE MACHINE AGRICOLE

(30) Priorität: 10.08.2021 DE 102021120813
(43) Veröffentlichungstag der Anmeldung: 15.02.2023
(73) Patentinhaber: CLAAS Tractor SAS, 78141 Vélizy-Villacoublay Cedex (FR)
(72) Erfinder: Birkmann, Christian, 33775 Versmold (DE); Schaub, Christian, 33098 Paderborn (DE); Pieper, Jona, 59394 Nordkirchen (DE)
(74) Vertreter: CLAAS Gruppe

(56) Entgegenhaltungen:
- EP-A1- 2 583 543
- EP-A1- 3 305 053
- WO-A1-2016/078782

## Beschreibung

Die vorliegende Erfindung betrifft ein Verfahren zur Regelung eines Heckkrafthebers einer landwirtschaftlichen Arbeitsmaschine gemäß dem Oberbegriff von Anspruch 1 sowie ein landwirtschaftliches Gespann gemäß dem Oberbegriff von Anspruch 13.

Landwirtschaftliche Arbeitsmaschinen wie Mähdrescher, Feldhäcksler und Traktoren, können mit diversen Anbaugeräten kombiniert werden. Diese Anbaugeräte werden über eine Geräteschnittstelle, häufig den Heckkraftheber, an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund. Das Anbaugerät ist über den Heckkraftheber mit der landwirtschaftlichen Arbeitsmaschine verbunden.

Derartige Anbaugeräte dienen allgemein der Durchführung einer landwirtschaftlichen Arbeitsaufgabe. Im Vordergrund stehen hier Bodenbearbeitungen wie das Pflügen oder Grubbern. Diesen Bodenbearbeitungen ist gemeinsam, dass die Anbaugeräte dabei zumeist auf eine spezifische Arbeitstiefe eingestellt werden. Der Erfolg und der Energieverbrauch der Bodenbearbeitung hängen dabei oft maßgeblich von der Arbeitstiefe ab. Gleichzeitig hängt diese jedoch von diversen Maschinenparametern des Anbaugeräts und der landwirtschaftlichen Arbeitsmaschine, insbesondere des Heckkrafthebers, ab.

Einstellungen des Heckkrafthebers müssen heute üblicherweise manuell vom Benutzer vorgenommen werden. Dieser kann eine Soll-Position des Heckkrafthebers relativ zum Traktor bei einer Lageregelung, oder indirekt eine Soll-Zugkraft bei einer Zugkraftregelung oder einen Mischfaktor zwischen einer Zugkraft- und Lageregelung vorgeben. Auch ein maximal zulässiger Schlupf kann bei einer Schlupfregelung zusätzlich vorgegeben werden. Dabei ist eine effiziente Einstellung des Heckkrafthebers für den Benutzer jedoch schwer möglich. Die genauen Effekte seiner Einstellungen sind ihm nicht bekannt. Insbesondere sind diese beim Schlupf von den Reifeneigenschaften und den Bodeneigenschaften abhängig. Deshalb werden Einstellungen des Heckkrafthebers meist einmalig zu Beginn eines Arbeitsprozesses getätigt und nicht an die momentane Situation angepasst. Bei Steigungen und Gefällen überlagern Gewichtseffekte eine gemessene Zugwiderstandskraft der Zugkraftregelung und können dazu führen, dass die Arbeitstiefe eines Anbaugerätes verändert wird.

Falsche Einstellungen des Heckkrafthebers führen zu einem erhöhten Kraftstoffverbrauch, einer reduzierten Flächenleistung, einem erhöhten Verschleiß und einem schlechteren Arbeitsergebnis.

Ein maximaler Schlupf wird somit herkömmlich durch den Benutzer manuell aufgrund seiner Erfahrung eingestellt. Abhängig von der Erfahrung und der Situation ist diese Einstellung nicht immer nah an einem Optimum.

Grundsätzlich sind diverse Verfahren zur Unterstützung des Benutzers bekannt, diese weisen jedoch weiterhin Optimierungsbedarf auf. Aus der WO 2016/078782 A1, der EP 2 583 543 A1 sowie der EP 3 305 053 A1 ist es beispielsweise grundsätzlich bekannt Betriebsparameter eines landwirtschaftlichen Fahrzeugs in Abhängigkeit vom Schlupf zu bestimmen. Insbesondere besteht Bedarf nach einer Möglichkeit, die Einstellung des maximalen Schlupfes zu optimieren.

Es ist dabei eine Herausforderung den bekannten Stand der Technik zu verbessern.

Der Erfindung liegt das Problem zugrunde, die bekannten Verfahren derart auszugestalten und weiterzubilden, dass eine optimierte Einstellung des Heckkrafthebers erreicht wird.

Das obige Problem wird durch die Merkmale des kennzeichnenden Teils von Anspruch 1 gelöst.

Wesentlich ist die grundsätzliche Überlegung, dass ein Fahrerassistenzsystem der landwirtschaftlichen Arbeitsmaschine in Abhängigkeit von mindestens einer vorliegenden Bodeneigenschaft und mindestens einer vorliegenden Reifeneigenschaft einen Schlupf ermitteln kann, der zur Verbesserung der Perfomance einer gegebenen Regelung, also einer Lageregelung, Zugkraftregelung und/oder Arbeitstiefenregelung optimiert ist. Statt dass ein Benutzer einen maximalen Schlupf einstellt, regelt das Fahrerassistenzsystem den Schlupf so, dass ein vorgegebenes Optimierungsziel erreicht wird. Dieses Optimierungsziel kann insbesondere eine maximale Triebkrafteffizienz oder ein maximaler Triebkraftbeiwert sein. Damit kann auch ein unerfahrener Benutzer eine hohe Effizienz bei der Einstellung des Schlupfes erreichen, indem er diese Einstellung dem Fahrerassistenzsystem überlässt.

Im Einzelnen wird vorgeschlagen, dass das Fahrerassistenzsystem in Abhängigkeit von mindestens einer vorliegenden Bodeneigenschaft und mindestens einer vorliegenden Reifeneigenschaft einen hinsichtlich der Lageregelung und/oder Zugkraftregelung und/oder Arbeitstiefenregelung optimierten Soll-Schlupf für die Schlupfregelung ermittelt und den Heckkraftheber auf den optimierten Soll-Schlupf regelt.

Zur Detektion mindestens einer vorliegenden Bodeneigenschaft kann das landwirtschaftliche Gespann gemäß Anspruch 2 einen Sensor aufweisen. Bodeneigenschaften können ortsabhängig sein, sich also über das Feld hinweg ändern, sich zeitlich ändern, beispielsweise bei Regen und insgesamt einen großen Einfluss auf den optimalen Schlupf haben. Durch eine sensorische Erfassung können einige dieser Einflüsse berücksichtigt werden.

Gemäß Anspruch 3 können weitere Bodeneigenschaften von einem Benutzer eingegeben oder in einer Datenbank hinterlegt sein. Beispielsweise eine Bodenart ändert sich nicht oder jedenfalls nicht mit einer relevanten Geschwindigkeit und ist sensorisch schwer zu detektieren.

Weiterhin kann das landwirtschaftliche Gespann gemäß Anspruch 4 einen Sensor zur Detektion zumindest einer vorliegenden Reifeneigenschaft aufweisen. Zusätzlich oder alternativ kann die Reifeneigenschaft von einem Benutzer eingegeben werden oder in einer Datenbank hinterlegt sein. Auch bei den Reifeneigenschaften können einige vorteilhaft sensorisch erfasst werden und andere nicht.

Anspruch 5 gibt bevorzugt von dem Fahrerassistenzsystem eingestellte Maschinenparameter des Heckkrafthebers an.

Gemäß Anspruch 6 ermittelt das Fahrerassistenzsystem den Soll-Schlupf vorzugsweise zur Erreichung eines maximalen Triebkraftwirkungsgrades oder zur Erreichung eines maximalen Triebkraftbeiwerts oder hinsichtlich einer Kombination daraus. Abhängig von Vorgaben des Benutzers oder anderen Vorgaben ist in manchen Situationen eine höhere Effizienz und in anderen eine maximale Geschwindigkeit oder Zugkraft gewünscht. Diese Vorgaben können auf diese Art und Weise berücksichtigt werden.

Unter Umständen kann gewünscht sein, die Schlupfregelung abzustellen. Gemäß Anspruch 7 kann das Fahrerassistenzsystem auf Basis der Bodeneigenschaften und Reifeneigenschaften dann eine Zugkraftregelung, Lageregelung oder eine Mischregelung nutzen.

Insgesamt kann das Fahrerassistenzsystem zusätzlich zum Soll-Schlupf eine Einstellung eines Mischfaktors einer Mischregelung aus Lageregelung und Zugkraftregelung ermitteln. Häufig sind die Ziele des Benutzers weniger technisch als die Vorgabe eines zu erreichenden Mischfaktors, der lediglich als Mittel zum Zweck dient. Insbesondere basierend auf Benutzervorgaben kann das Fahrerassistenzsystem also die Arbeit der Regelung und der Vorgaben an die Regelung übernehmen. Diese Ausgestaltung ist Gegenstand von Anspruch 8.

Da nicht immer alle notwendigen Bodeneigenschaften und Reifeneigenschaften zur Verfügung stehen, kann gemäß Anspruch 9 vorgesehen sein, dass das Fahrerassistenzsystem in einer Kennfeldroutine ein Kennfeld ermittelt, das die Abhängigkeiten zwischen Boden, Reifen und Schlupf abbildet und als Grundlage für die Ermittlung des Soll-Schlupfes dient. Diese Kennfeldroutine kann über viele Arbeitsprozesse laufen und sich stückweise verbessern oder bei jedem Arbeitsprozess oder wenn notwendig ablaufen.

Bei einer bevorzugten Ausgestaltung nach Anspruch 10 kann vorgesehen sein, dass das landwirtschaftliche Anbaugerät einen Sensor zur Ermittlung einer absoluten Arbeitstiefe für die Arbeitstiefenregelung aufweist. Damit wird ermöglicht, einen der wichtigsten Maschinenparameter, namentlich die Arbeitstiefe, des Anbaugerätes direkt zu regeln, dafür genaue Messdaten zur Arbeitstiefe zu verwenden und mit der Schlupfregelung überlagert Effizienzgesichtspunkte zu berücksichtigen.

Weiterhin relevant für einen Arbeitsprozess sind die Maschinenparameter des Anbaugerätes. Ähnlich wie bei der Arbeitstiefenregelung können diese gemäß Anspruch 11 abhängig vom Soll-Schlupf gesteuert oder geregelt werden oder der Soll-Schlupf kann abhängig von den Maschinenparametern ermittelt werden. Auch damit wird die Abstimmung zwischen Schlupf und tatsächlicher Feldbearbeitung verbessert. Dabei ist es so, dass diverse Maschinenparameter des Gespanns einen unterschiedlichen Einfluss auf den Schlupf und auf das Arbeitsergebnis haben. Steht aufgrund des optimierten Soll-Schlupfes nicht genug Spielraum zur Verfügung, um alle Maschinenparameter wie gewünscht einzustellen, würde die Schlupfregelung das Anbaugerät teilweise ausheben. Durch die vorschlagsgemäße Lösung kann stattdessen ein anderer Maschinenparameter, der einen Einfluss auf den Schlupf aber beispielsweise einen geringeren Einfluss auf das Arbeitsergebnis hat, geändert werden.

Fährt das Gespann einen Hang hinauf heben herkömmliche Systeme das Anbaugerät, insbesondere einen Pflug, oft teilweise aus, um den erhöhten Bedarf an Antriebskraft zu kompensieren. Gemäß Anspruch 12 wird vorgeschlagen, das Gesamtgewicht des Gespanns und eine Neigung zu berücksichtigen, um diesem Effekt entgegenwirken zu können. Dabei kann der Soll-Schlupf insbesondere erhöht werden, um am Hang beispielsweise auf Kosten der Triebkraftseffizienz eine konstantere Arbeitstiefe zu erreichen.

Nach einer weiteren Lehre gemäß Anspruch 13, der eigenständige Bedeutung zukommt, wird ein landwirtschaftliches Gespann beansprucht.

Dabei ist wesentlich, dass das Fahrerassistenzsystem in Abhängigkeit von mindestens einer vorliegenden Bodeneigenschaft und mindestens einer vorliegenden Reifeneigenschaft einen hinsichtlich der Lageregelung und/oder Zugkraftregelung optimierten Soll-Schlupf für die Schlupfregelung ermittelt und den Heckkraftheber auf den optimierten Soll-Schlupf regelt.

Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: ein landwirtschaftliches Gespann zur Verwendung in dem vorschlagsgemäßen Verfahren und
- Fig. 2: schematisch die Abhängigkeit zwischen Schlupf und Triebkraftswirkungsgrad.

Bei dem dargestellten und insoweit bevorzugten Ausführungsbeispiel handelt es sich bei der landwirtschaftlichen Arbeitsmaschine 1 um einen Traktor. Dieser weist einen Heckkraftheber 2 auf, der als Dreipunkt-Kraftheber ausgestaltet ist. Ein an dem Hecckraftheber 2 befestigtes Anbaugerät 3 kann insbesondere ein Bodenbearbeitungsgeräte wie ein Pflug 4 oder ein Grubber oder eine Egge sein. Zusammen bilden landwirtschaftliche Arbeitsmaschine 1 und landwirtschaftliches Anbaugerät 3 ein landwirtschaftliches Gespann 5.

Das in den Figuren dargestellte und insoweit bevorzugte Ausführungsbeispiel betrifft ein Verfahren zur Regelung eines Heckkrafthebers 2 einer landwirtschaftlichen Arbeitsmaschine 1 in einem landwirtschaftlichen Gespann 5, wobei das landwirtschaftliche Gespann 5 eine landwirtschaftliche Arbeitsmaschine 1 und ein landwirtschaftliches Anbaugerät 3 aufweist und wobei das landwirtschaftliche Anbaugerät 3 über einen Hecckraftheber 2 der landwirtschaftlichen Arbeitsmaschine 1 mit der landwirtschaftlichen Arbeitsmaschine 1 verbunden ist.

Die landwirtschaftliche Arbeitsmaschine 1 weist ein Fahrerassistenzsystem 6 auf, das Maschinenparameter des Heckkrafthebers 2 regelt. Das Fahrerassistenzsystem 6 regelt die Maschinenparameter, insbesondere eine Kinematik, des Heckkrafthebers 2 mittels einer Lageregelung und/oder einer Zugkraftregelung und/oder einer Arbeitstiefenregelung, der eine Schlupfregelung überlagert ist.

Lageregelungen und Zugkraftregelungen sind so weit seit langem bekannt. Bei der Arbeitstiefenregelung wird eine Arbeitstiefe 7 des Anbaugerätes 3 auf einen vorgegebenen Wert geregelt und die Zugkraft und die Lage des Heckkrafthebers 2 stellen sich wenn nötig entsprechend ein. Diese Arbeitstiefe 7 kann dabei ortsabhängig sein, also über den Verlauf des Feldes während eines Arbeitsprozesses variieren.

Das Fahrerassistenzsystem 6 kann Teil der landwirtschaftlichen Arbeitsmaschine 1 sein, kann jedoch auch extern zur landwirtschaftlichen Arbeitsmaschine 1, beispielsweise als Cloud-Steueranordnung, angeordnet sein.

Wesentlich ist nun, dass das Fahrerassistenzsystem 6 in Abhängigkeit von mindestens einer vorliegenden Bodeneigenschaft und mindestens einer vorliegenden Reifeneigenschaft einen hinsichtlich der Lageregelung und/oder Zugkraftregelung und/oder Arbeitstiefenregelung optimierten Soll-Schlupf P für die Schlupfregelung ermittelt und den Heckkraftheber 2 auf den optimierten Soll-Schlupf P regelt.

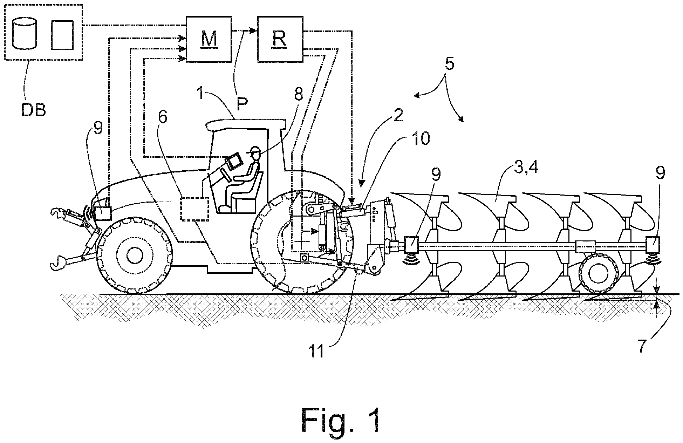

Fig. 1 verdeutlicht die Zweiteilung der Regelung. Dafür enthält Fig. 1 ein schematisch zu verstehendes Blockschaltbild des Fahrerassistenzsystems 6. Der erste Block M enthält eine Rechenvorschrift, beispielsweise ein Expertenmodell oder Kennfeldmodell zur Ermittlung des optimierten Soll-Schlupfes P. Dieser wird an den zweiten Block R übergeben. Der zweite Block R enthält die Lageregelung und/oder Zugkraftregelung und/oder Arbeitstiefenregelung, der bzw. denen die Schlupfregelung überlagert ist. In den ersten Block M fließen Daten aus einer Datenbank, insbesondere die Bodeneigenschaft und/oder Reifeneigenschaft und weitere Daten des landwirtschaftlichen Gespanns 5 ein.

Die Einstellung des Fahrerassistenzsystems 6 kann grundsätzlich dialogbasiert unter Einbindung des Benutzers 8 erfolgen.

Unter dem Begriff "optimierter Soll-Schlupf' ist nicht unbedingt der optimale Soll-Schlupf P zu verstehen. Es reicht, dass hinsichtlich eines irgendwie optimalen Soll-Schlupfes P optimiert wird. Das Optimierungsziel kann dabei vom Benutzer 8 oder anderweitig vorgegeben sein. Dies wird im Folgenden noch erläutert. Wie einleitend bereits bemerkt, ist der optimale Soll-Schlupf P von den Bodeneigenschaften und den Reifeneigenschaften abhängig. Er kann sich bei nassem Boden und bei trockenem Boden beispielsweise deutlich unterscheiden. Die Optimierung kann bevorzugt über ein Expertenmodell erfolgen. So sind diverse Messreihen zum Thema "optimaler Schlupf' bekannt, die in ein derartiges Expertenmodell umgesetzt werden können. Hier und vorzugsweise ist der optimierte Soll-Schlupf P ein maximaler Schlupf. Wird dieser erreicht oder überschritten, wird das Anbaugerät 3 teilweise ausgehoben, um den Schlupf wieder zu reduzieren. Es ist daher nicht so, dass der Soll-Schlupf P zwingend dauerhaft eingestellt ist.

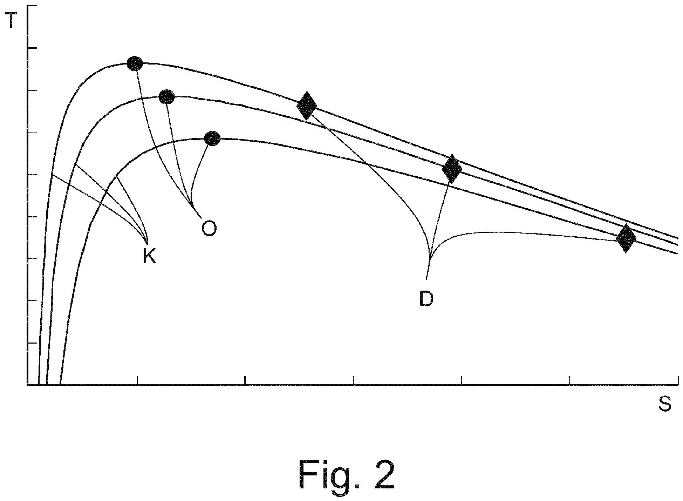

Fig. 2 zeigt schematisch die Abhängigkeit zwischen einem prozentualen Schlupf S auf der Abszisse und einem Triebkraftswirkungsgrad T auf der Ordinate bei der Feldarbeit. Die verschiedenen Kurven K betreffen dabei unterschiedliche Bodeneigenschaften. Das Maximum der Kurven K liegt bei üblichen Bodeneigenschaften im Bereich eines prozentualen Schlupfes S von 10% bis 20%. Der jeweilige maximale Triebkraftswirkungsgrad O liegt etwa zwischen 50% und 80% ist mit einem Kreis gekennzeichnet, während der Diamant einen optimalen Schlupf für einen maximalen Triebkraftbeiwert D angibt. Der Graph ist dabei nur schematisch zu verstehen.

Weiter ist hier und vorzugsweise vorgesehen, dass das landwirtschaftliche Gespann 5 einen Sensor 9 zur Detektion zumindest einer der vorliegenden Bodeneigenschaften aufweist, vorzugsweise, dass der Sensor 9 eine Steigung des Bodens und/oder eine Oberflächeneigenschaft des Bodens, insbesondere eine Krümelung des Bodens und/oder eine Einebnung des Bodens, detektiert.

Wie Fig. 1 darstellt, kann vorgesehen sein, dass der Sensor 9 in einem Bereich vor einer Bodenbearbeitung durch das Anbaugerät 3 sitzt. Insbesondere kann der Sensor 9 an der landwirtschaftlichen Arbeitsmaschine 1 sitzen. Bei dem Sensor 9 kann es sich grundsätzlich um einen Sensor 9 auf Basis elektromagnetischer Wellen oder akustischer Wellen handeln. Der Sensor 9 kann ein Radar-Sensor oder ein Lidar-Sensor oder ein optischer Sensor oder ein Ultraschall-Sensor sein. Weiterhin kann der Sensor 9 auch ein Neigungssensor sein, der eine Neigung der landwirtschaftlichen Arbeitsmaschine 1 detektiert und daraus vorzugsweise auf eine Berg- oder Talfahrt schließt. Die Steigung als Bodeneigenschaft ist vorliegend besonders relevant, da diese mit sehr wenig Aufwand detektiert werden kann und sie gleichzeitig einen großen Einfluss auf die Regelung des Heckkrafthebers 2 hat.

Es kann vorgesehen sein, dass zumindest eine der Bodeneigenschaften von einem Benutzer 8 eingegeben wird und/oder in einer Datenbank DB hinterlegt ist. Die mindestens eine Bodeneigenschaft kann in der Datenbank DB ortsabhängig hinterlegt sein. Bevorzugt ist, dass die mindestens eine Bodeneigenschaft in der Datenbank DB eine Kompaktierung umfasst.

Unabhängig von ihrer Herkunft kann die Bodeneigenschaft ortsabhängig sein. Bei einem Sensor 9 ist dies zumeist inhärent, bei einer eingegebenen oder aus einer Datenbank DB stammende Bodeneigenschaft ist es jedoch ebenfalls bevorzugt. Die Bodeneigenschaft kann beispielsweise Fahrspurdaten umfassen, die Rückschlüsse auf eine Kompaktierung in den Fahrspuren erlauben. Die Datenbank DB kann grundsätzlich Teil des Fahrerassistenzsystems 6 sein oder die Daten könne an das Fahrerassistenzsystem 6 übertragen werden.

Unter dem Begriff "ortsabhängig" ist zu verstehen, dass die Bodeneigenschaften sich über ein Feld ändern und entsprechend auf dem einzelnen Feld noch eine Ortsauflösung aufweisen.

Zusätzlich oder alternativ kann vorgesehen sein, dass das landwirtschaftliche Gespann 5 einen Sensor 9 zur Detektion zumindest einer vorliegenden Reifeneigenschaft aufweist, und/oder, dass zumindest eine der mindestens einen Reifeneigenschaften von dem Benutzer 8 eingegeben wird und/oder in der Datenbank DB hinterlegt ist. Insofern gelten die Ausführungen zu den Bodeneigenschaften entsprechend.

Vorzugsweise ist vorgesehen, dass die mindestens eine Reifeneigenschaft ein Gewicht der landwirtschaftlichen Arbeitsmaschine 1, insbesondere eine Achslast und/oder eine Achsballastierung, und/oder eine Reifengröße und/oder einen Rollradius des Reifens und/oder einen Reifendruck umfasst.

Alle genannten Eigenschaften können einzeln oder beliebig kombiniert verwendet werden. Die Reifeneigenschaften können jeweils einen oder mehrere Reifen betreffen. Insgesamt ergibt sich also, dass der Schlupf abhängig vom Boden, einem auf dem Reifen lastenden Gewicht, Reifenmaterialien und dergleichen ist. Daher können diese Eigenschaften zur Ermittlung des Soll-Schlupfes P berücksichtigt werden.

Im Rahmen der jeweiligen Regelungen kann es nun so sein, dass das Fahrerassistenzsystem 6 am Heckkraftheber 2 als Maschinenparameter eine Hubwerkposition des Oberlenkers 10 und/oder eines oder der Unterlenker 11 und/oder eine Hubwerkkraft eines oder der Unterlenker 11 und/oder eine Länge des Oberlenkers 10 und/oder eines oder der Unterlenker 11 und/oder einer Hubstrebe und/oder eine Oberlenkerkraft 10 regelt. Dabei sei erwähnt, dass das Fahrerassistenzsystem 6 hier weit definiert ist. Es kann auch einen Heckkraft-Regler aufweisen, der als solcher ein eigenständiges Modul sein kann und der in Fig. 1 durch den zweiten Block R dargestellt wird.

Weiter ist hier und vorzugsweise vorgesehen, dass das Fahrerassistenzsystem 6 den Soll-Schlupf P zur Erreichung eines maximalen Triebkraftwirkungsgrads oder eines maximalen Triebkraftbeiwert oder hinsichtlich einer optimierten Kombination aus Triebkraftwirkungsgrad und Triebkraftbeiwert ermittelt.

Die Optimierung hinsichtlich des Triebkraftwirkungsgrads und des Triebkraftbeiwerks ist hier und vorzugsweise abhängig von einer Benutzervorgabe. Diese Benutzervorgabe kann eine Zielvorgabe sein. Die Zielvorgabe kann eine Minimierung des Verbrauchs oder eine Maximierung einer Geschwindigkeit der Durchführung des Arbeitsprozesses und/oder eine Minimierung der Kosten des Prozesses und/oder eine Maximierung der Arbeitsqualität sein. Vorzugsweise kann der Benutzer 8 die Gewichtung der Zielvorgaben visuell an der landwirtschaftlichen Arbeitsmaschine 1 einstellen.

Es kann auch vorgesehen sein, dass das Fahrerassistenzsystem 6 auf Basis der mindestens einen vorliegenden Bodeneigenschaft und der mindestens einen vorliegenden Reifeneigenschaft zeitweise den Heckkraftheber 2 mittels einer Lageregelung ohne Schlupfregelung und/oder einer Zugkraftregelung ohne Schlupfregelung und/oder einer Mischregelung aus Lageregelung und Zugkraftregelung ohne Schlupfregelung regelt und vorzugsweise dafür einen optimierten Mischfaktor der Mischregelung ermittelt. Zusätzlich oder alternativ kann das Fahrerassistenzsystem 6 den optimierten Mischfaktor für Zeiträume ermitteln, in denen der Soll-Schlupf P nicht erreich wird und die Schlupf-Regelung daher nicht greift.

Damit wird dem Umstand Rechnung getragen, dass eine Schlupf-Regelung nicht immer möglich oder sinnvoll ist. Somit kann das Fahrerassistenzsystem 6 auf bekannte Regelungen zurückfallen. Insbesondere kann vorgesehen sein, dass das Fahrerassistenzsystem 6 einen Mangel an Informationen zu den Bodeneigenschaften und Reifeneigenschaften erkennt und daraus ableitet, dass ein optimierter Soll-Schlupf P nicht mit hinreichender Sicherheit bestimmt werden kann.

Weiter ist hier und vorzugsweise vorgesehen, dass das Fahrerassistenzsystem 6 auf Basis der mindestens einen vorliegenden Bodeneigenschaft und der mindestens einen vorliegenden Reifeneigenschaft und/oder des Soll-Schlupfs eine Einstellung eines Mischfaktors einer Mischregelung aus Lageregelung und Zugkraftregelung optimiert ermittelt und den Heckkraftheber 2 darauf basierend regelt.

Neben der Schlupfregelung kann also auch die Lageregelung oder die Zugkraftregelung oder insbesondere deren Mischung von dem Fahrerassistenzsystem 6 optimiert werden. Dies kann zur Erreichung einer Benutzervorgabe geschehen. Somit kann der Benutzer 8 beispielsweise die genannten Zielvorgaben tätigen oder eine gewünschte Arbeitstiefe 7 einstellen und das Fahrerassistenzsystem 6 übernimmt die Regelung des Heckkrafthebers 2. Das Fahrerassistenzsystem 6 kann dann standardmäßig den Schlupf hinsichtlich einer Effizienz optimieren, sofern noch Spielraum besteht

Vorzugsweise ist vorgesehen, dass das Fahrerassistenzsystem 6 den Mischfaktor und vorzugsweise den Soll-Schlupf P zur Erreichung einer Vorgabe, insbesondere einer Benutzervorgabe, ermittelt. Die Vorgabe kann insbesondere eine vorgegebene Arbeitstiefe 7 oder eine vorgegebene Fahrgeschwindigkeit oder eine vorgegebene Zugkraft sein. Ein bevorzugter Ablauf ist dabei, dass der Benutzer 8 eine Arbeitstiefe 7 vorgibt und die Zugkraft und vorzugsweise eine Fahrgeschwindigkeit des Gespanns 5 folgen aus dem Soll-Schlupf P, da die landwirtschaftliche Arbeitsmaschine üblicherweise bei einer Bodenbearbeitung unter oder nahe der Volllast arbeitet.

Weiter ist möglich, dass das Fahrerassistenzsystem 6 in einer Kennfeldroutine bei gegebenen Bodeneigenschaften und Reifeneigenschaften Einstellungen des Heckkrafthebers 2 variiert um Abhängigkeiten zwischen den Bodeneigenschaften und Reifeneigenschaften und dem Schlupf, insbesondere in Form eines Kennfelds, zu ermitteln und anschließend darauf basierend den Soll-Schlupf P zu ermitteln.

Damit wird ermöglicht, Einflüsse unbekannter Reifeneigenschaften und Bodeneigenschaften oder unbekannter Einflüsse auf den Schlupf zu ermitteln. Die Kennfeldroutine kann über mehrere Arbeitsprozesse laufen und somit Stück für Stück zu einer Optimierung führen oder jeweils zu Beginn eines Arbeitsprozesses, sofern notwendig, durchgeführt werden.

Kennfelder sind Gleichungen oder Kombinationen aus Gleichungen und/oder Ungleichungen oder anderweitig abgebildeten Abhängigkeiten zwischen Einstellungen von Maschinenparametern, Messdaten, Einflussfaktoren und dergleichen.

Weiter ist hier und vorzugsweise vorgesehen, dass das landwirtschaftliche Anbaugerät 3 einen Sensor 9 zur Ermittlung einer absoluten Arbeitstiefe 7 für die Arbeitstiefenregelung aufweist.

Mittels des Sensors wird eine absolute Arbeitstiefe gemessen. Unter dem Begriff "absolut" wird nicht zwingend eine hochgenaue Messung verstanden, sondern allgemeine eine Messung relativ zum Boden. Dabei ist grundsätzlich denkbar, dass die Messung relativ zu einem Bauteil erfolgt, dessen Höhe relativ zum Boden wiederum bekannt ist, vorzugsweise wird die absolute Arbeitstiefe jedoch direkt relativ zum Boden gemessen.

Der Sensor kann Teil einer Sensoranordnung sein. Die Sensoranordnung kann mindestens eine Sensorhalterung aufweisen, wobei der Sensor mittels der mindestens einen Sensorhalterung jeweils an einer Montageposition an unterschiedlichen Anbaugeräten reversibel montiert wird.

Die Montage des Sensors mittels der Sensorhalterung an der Montageposition erfolgt derart, dass die Montage zerstörungsfrei reversibel ist. Insbesondere erfolgt sie auch nicht im Rahmen der Herstellung des Anbaugerätes, sondern ist vorzugsweise vor Ort auf dem Feld mit einfachen Hilfsmitteln oder ganz ohne Hilfsmittel möglich.

Der Sensor kann daher mit verschiedenen Anbaugeräten verwendet werden und ist insofern modular. Eine vorteilhafte Anwendung dieser modularen Sensorik betrifft auch die Messung der Arbeitstiefe bei einem Anbaugerät, das keine eigene Elektronik aufweist. Wie sich im Folgenden noch ergibt, kann die Sensoranordnung insofern autark von dem Anbaugerät sein. Alternativ kann vorgesehen sein, dass der Sensor nicht mit dem Anbaugerät kommuniziert. Genauso kann jedoch vorgesehen sein, dass der Sensor in eine Elektronik des Anbaugerätes integriert wird oder mit dieser kommuniziert. Auch bei Anbaugeräten mit Elektronik kann jedoch vorgesehen sein, dass der Sensor nicht direkt mit dem Anbaugerät kommuniziert. Bevorzugt ist, dass die Sensoranordnung mit Anbaugeräten mit und ohne Elektronik verwendbar ist. Insgesamt kann sogar vorgesehen sein, dass die Ermittlung der Arbeitstiefe vollständig unabhängig von dem landwirtschaftlichen Anbaugerät ist.

Hier und vorzugsweise ist vorgesehen, dass die Sensorhalterung vom Sensor getrennt an den unterschiedlichen Anbaugeräten montierbar ist. Der Sensor ist dann reversibel an der Sensorhalterung montierbar. Es kann grundsätzlich vorgesehen sein, dass die Sensorhalterung ein relativ günstiges Massenbauteil ist, während der Sensor selbst relativ teuer ist. Das vorschlagsgemäße Verfahren ermöglicht die Wiederverwendung des teuren Sensors.

Aus Komfortgründen kann jedoch vorgesehen sein, dass die Sensorhalterung an dem Anbaugerät verbleibt. Dies ermöglicht, die Sensorhalterung stabil und aufwändiger zu montieren, während die Montage des Sensors an der Sensorhalterung selbst vorzugsweise relativ einfach ist. Dies ermöglicht auch die Wiederverwendung derselben Montageposition bei erneutem Anbringen des Sensors.

Zur Ermittlung der Arbeitshöhe kann eine Referenzhöhe hinterlegt sein, die die Arbeitshöhe bei einem bekannten Abstand des Sensors zum Boden angibt. Die Arbeitshöhe kann sich dann aus der Differenz dazu ergeben.

Weiter ist hier und vorzugsweise vorgesehen, dass das Fahrerassistenzsystem 6 weiterhin Maschinenparameter des Anbaugerätes 3 in Abhängigkeit des Soll-Schlupfes P steuert oder regelt und/oder den Soll-Schlupf P abhängig von den Maschinenparametern ermittelt, vorzugsweise, dass das Fahrerassistenzsystem 6 eine Schnittbreite und/oder eine Arbeitstiefe 7 eines Pflugs 4 abhängig von dem Soll-Schlupf P steuert oder regelt.

Es kann auch vorgesehen sein, dass das Fahrerassistenzsystem 6 den Soll-Schlupf P weiterhin in Abhängigkeit von einem Gesamtgewicht des landwirtschaftlichen Gespanns 5 und einer Neigung des Bodens und/oder des landwirtschaftlichen Gespanns 5 ermittelt. Dafür kann das landwirtschaftliche Gespann 5 einen Neigungssensor zur Ermittlung der Neigung des landwirtschaftliche Gespanns 5 aufweisen. Alternativ kann die Neigung des Bodens einer Datenbank DB entnommen werden. Das gemeinsame Gewicht der landwirtschaftlichen Arbeitsmaschine 1 und des landwirtschaftlichen Anbaugerätes 3 bestimmen maßgeblich das Verhalten des Gespanns 5 am Hang.

Vorzugsweise ermittelt das Fahrerassistenzsystem 6 das Gewicht des landwirtschaftlichen Gespanns 5 aus einem Ist-Schlupf, insbesondere durch sukzessive Anpassung des Soll-Schlupfes. Stellt das Fahrerassistenzsystem 6 am Hang einen Soll-Schlupf P ein, wird das Anbaugerät durch die nachgelagerte Regelung auf eine bestimmte Arbeitstiefe 7 ausgehoben. Daraus lassen sich Rückschlüsse auf das Gewicht ziehen. Zusätzlich oder alternativ kann das Fahrerassistenzsystem 6 eine andere Ist-Größe, insbesondere eine Ist-Lage und/oder eine Ist-Zugkraft und/oder eine Ist-Arbeitstiefe zur Ermittlung des Gewichts nutzen. Dabei muss das Gewicht nicht als solches ermittelt werden, es reicht, den Soll-Schlupf P abhängig von einer so ermittelten, gewichtsabhängigen Größe oder auf Basis einer das Gewicht indirekt berücksichtigenden Rechenvorschrift anzupassen. Bevorzugt wird so am Hang der Soll-Schlupf gewichtsabhängig angepasst.

Ebenso kann das Gewicht jedoch auch vom Benutzer eingegeben werden.

Vorgeschlagen wird außerdem gemäß einer weiteren Lehre, der eigenständige Bedeutung zukommt, ein landwirtschaftliches Gespann 5, wobei das landwirtschaftliche Gespann 5 eine landwirtschaftliche Arbeitsmaschine 1 und ein landwirtschaftliches Anbaugerät 3 aufweist, wobei das landwirtschaftliche Anbaugerät 3 über einen Heckkraftheber 2 der landwirtschaftlichen Arbeitsmaschine 1 mit der landwirtschaftlichen Arbeitsmaschine 1 verbunden ist, wobei die landwirtschaftliche Arbeitsmaschine 1 ein Fahrerassistenzsystem 6 aufweist, das Maschinenparameter des Heckkrafthebers 2 regelt, wobei das Fahrerassistenzsystem 6 die Maschinenparameter des Heckkrafthebers 2 mittels einer Lageregelung und/oder einer Zugkraftregelung regelt, der eine Schlupfregelung überlagert ist.

Wesentlich ist nun, dass das Fahrerassistenzsystem 6 in Abhängigkeit von mindestens einer vorliegenden Bodeneigenschaft und mindestens einer vorliegenden Reifeneigenschaft einen hinsichtlich der Lageregelung und/oder Zugkraftregelung optimierten Soll-Schlupf P für die Schlupfregelung ermittelt und den Heckkraftheber 2 auf den optimierten Soll-Schlupf P regelt.

Auf alle Ausführungen zu dem vorschlagsgemäßen Verfahren darf verwiesen werden.

### Bezugszeichenliste

- 1: landwirtschaftliche Arbeitsmaschine
- 2: Heckkraftheber
- 3: landwirtschaftliches Anbaugerät
- 4: Pflug
- 5: landwirtschaftliches Gespann
- 6: Fahrerassistenzsystem
- 7: Arbeitstiefe
- 8: Benutzer
- 9: Sensor
- 10: Oberlenker
- 11: Unterlenker
- P: Soll-Schlupf
- M: erster Block
- R: zweiter Block
- DB: Datenbank
- S: prozentualer Schlupf
- T: Triebkraftswirkungsgrad
- K: Kurve
- O: maximaler Triebkraftswirkungsgrad
- D: maximaler Triebkraftbeiwert

## Patentansprüche

1. Verfahren zur Regelung eines Heckkrafthebers (2) einer landwirtschaftlichen Arbeitsmaschine (1) in einem landwirtschaftlichen Gespann (5), wobei das landwirtschaftliche Gespann (5) eine landwirtschaftliche Arbeitsmaschine (1) und ein landwirtschaftliches Anbaugerät (3) aufweist, wobei das landwirtschaftliche Anbaugerät (3) über einen Heckkraftheber (2) der landwirtschaftlichen Arbeitsmaschine (1) mit der landwirtschaftlichen Arbeitsmaschine (1) verbunden ist,
wobei die landwirtschaftliche Arbeitsmaschine (1) ein Fahrerassistenzsystem (6) aufweist, das Maschinenparameter des Heckkrafthebers (2) regelt,
wobei das Fahrerassistenzsystem (6) die Maschinenparameter des Heckkrafthebers (2) mittels einer Lageregelung und/oder einer Zugkraftregelung und/oder einer Arbeitstiefenregelung regelt, der eine Schlupfregelung überlagert ist,
**dadurch gekennzeichnet,**
**dass** das Fahrerassistenzsystem (6) in Abhängigkeit von mindestens einer vorliegenden Bodeneigenschaft und mindestens einer vorliegenden Reifeneigenschaft einen hinsichtlich der Lageregelung und/oder Zugkraftregelung und/oder Arbeitstiefenregelung optimierten Soll-Schlupf (P) für die Schlupfregelung ermittelt und den Heckkraftheber (2) auf den optimierten Soll-Schlupf (P) regelt.

2. Verfahren nach Anspruch 1, **dadurch gekennzeichnet, dass** das landwirtschaftliche Gespann (5) einen Sensor (9) zur Detektion zumindest einer der vorliegenden Bodeneigenschaften aufweist, vorzugsweise, dass der Sensor (9) eine Steigung des Bodens und/oder eine Oberflächeneigenschaft des Bodens, insbesondere eine Krümelung des Bodens und/oder eine Einebnung des Bodens, detektiert.

3. Verfahren nach Anspruch 1 oder 2, **dadurch gekennzeichnet, dass** zumindest eine der Bodeneigenschaften von einem Benutzer (8) eingegeben wird und/oder in einer Datenbank (DB) hinterlegt ist, vorzugsweise, dass die mindestens eine Bodeneigenschaft in der Datenbank (DB) ortsabhängig hinterlegt ist, weiter vorzugsweise, dass die mindestens eine Bodeneigenschaft in der Datenbank (DB) eine Kompaktierung umfasst.

4. Verfahren nach einem der vorhergehenden Ansprüche, **dadurch gekennzeichnet, dass** das landwirtschaftliche Gespann (5) einen Sensor (9) zur Detektion zumindest einer vorliegenden Reifeneigenschaft aufweist, und/oder, dass zumindest eine der mindestens einen Reifeneigenschaften von dem Benutzer (8) eingegeben wird und/oder in der Datenbank (DB) hinterlegt ist, vorzugsweise, dass die mindestens eine Reifeneigenschaft ein Gewicht der landwirtschaftlichen Arbeitsmaschine (1), insbesondere eine Achslast und/oder eine Achsballastierung, und/oder eine Reifengröße und/oder einen Rollradius des Reifens und/oder einen Reifendruck umfasst.

5. Verfahren nach einem der vorhergehenden Ansprüche, **dadurch gekennzeichnet, dass** das Fahrerassistenzsystem (6) am Heckkraftheber (2) als Maschinenparameter eine Hubwerkposition des Oberlenkers (10) und/oder eines oder der Unterlenker (11) und/oder eine Hubwerkkraft eines oder der Unterlenker (11) und/oder eine Länge des Oberlenkers (10) und/oder eines oder der Unterlenker (11) und/oder einer Hubstrebe und/oder eine Oberlenkerkraft (10) regelt.

6. Verfahren nach einem der vorhergehenden Ansprüche, **dadurch gekennzeichnet, dass** das Fahrerassistenzsystem (6) den Soll-Schlupf (P) zur Erreichung eines maximalen Triebkraftwirkungsgrads oder eines maximalen Triebkraftbeiwert oder hinsichtlich einer optimierten Kombination aus Triebkraftwirkungsgrad und Triebkraftbeiwert ermittelt.

7. Verfahren nach einem der vorhergehenden Ansprüche, **dadurch gekennzeichnet, dass** das Fahrerassistenzsystem (6) auf Basis der mindestens einen vorliegenden Bodeneigenschaft und der mindestens einen vorliegenden Reifeneigenschaft zeitweise den Heckkraftheber (2) mittels einer Lageregelung ohne Schlupfregelung und/oder einer Zugkraftregelung ohne Schlupfregelung und/oder einer Mischregelung aus Lageregelung und Zugkraftregelung ohne Schlupfregelung regelt und vorzugsweise dafür einen optimierten Mischfaktor der Mischregelung ermittelt.

8. Verfahren nach einem der vorhergehenden Ansprüche, **dadurch gekennzeichnet, dass** das Fahrerassistenzsystem (6) auf Basis der mindestens einen vorliegenden Bodeneigenschaft und der mindestens einen vorliegenden Reifeneigenschaft und/oder des Soll-Schlupfs eine Einstellung eines Mischfaktors einer Mischregelung aus Lageregelung und Zugkraftregelung optimiert ermittelt und den Heckkraftheber (2) darauf basierend regelt, vorzugsweise, dass das Fahrerassistenzsystem (6) den Mischfaktor und vorzugsweise den Soll-Schlupf (P) zur Erreichung einer Vorgabe, insbesondere einer Benutzervorgabe, ermittelt, weiter vorzugsweise, dass die Vorgabe eine vorgegebene Arbeitstiefe (7) oder eine vorgegebene Fahrgeschwindigkeit oder eine vorgegebene Zugkraft ist.

9. Verfahren nach einem der vorhergehenden Ansprüche, **dadurch gekennzeichnet, dass** das Fahrerassistenzsystem (6) in einer Kennfeldroutine bei gegebenen Bodeneigenschaften und Reifeneigenschaften Einstellungen des Heckkrafthebers (2) variiert um Abhängigkeiten zwischen den Bodeneigenschaften und Reifeneigenschaften und dem Schlupf, insbesondere in Form eines Kennfelds, zu ermitteln und anschließend darauf basierend den Soll-Schlupf (P) zu ermitteln.

10. Verfahren nach einem der vorhergehenden Ansprüche, **dadurch gekennzeichnet, dass** das landwirtschaftliche Anbaugerät (3) einen Sensor (9) zur Ermittlung einer absoluten Arbeitstiefe (7) für die Arbeitstiefenregelung aufweist.

11. Verfahren nach einem der vorhergehenden Ansprüche, **dadurch gekennzeichnet, dass** das Fahrerassistenzsystem (6) weiterhin Maschinenparameter des Anbaugerätes (3) in Abhängigkeit des Soll-Schlupfes (P) steuert oder regelt und/oder den Soll-Schlupf (P) abhängig von den Maschinenparametern ermittelt, vorzugsweise, dass das Fahrerassistenzsystem (6) eine Schnittbreite und/oder eine Arbeitstiefe (7) eines Pflugs (4) abhängig von dem Soll-Schlupf (P) steuert oder regelt.

12. Verfahren nach einem der vorhergehenden Ansprüche, **dadurch gekennzeichnet, dass** das Fahrerassistenzsystem (6) den Soll-Schlupf (P) weiterhin in Abhängigkeit von einem Gesamtgewicht des landwirtschaftlichen Gespanns (5) und einer Neigung des Bodens und/oder des landwirtschaftlichen Gespanns (5) ermittelt.

13. Landwirtschaftliches Gespann, wobei das landwirtschaftliche Gespann (5) eine landwirtschaftliche Arbeitsmaschine (1) und ein landwirtschaftliches Anbaugerät (3) aufweist, wobei das landwirtschaftliche Anbaugerät (3) über einen Heckkraftheber (2) der landwirtschaftlichen Arbeitsmaschine (1) mit der landwirtschaftlichen Arbeitsmaschine (1) verbunden ist,
wobei die landwirtschaftliche Arbeitsmaschine (1) ein Fahrerassistenzsystem (6) aufweist, das dazu eingerichtet ist, Maschinenparameter des Heckkrafthebers (2) zu regeln,
wobei das Fahrerassistenzsystem (6) dazu eingerichtet ist, die Maschinenparameter des Heckkrafthebers (2) mittels einer Lageregelung und/oder einer Zugkraftregelung zu regeln, der bzw. denen eine Schlupfregelung überlagert ist,
**dadurch gekennzeichnet,**
**dass** das Fahrerassistenzsystem (6) weiterhin dazu eingerichtet ist, in Abhängigkeit von mindestens einer vorliegenden Bodeneigenschaft und mindestens einer vorliegenden Reifeneigenschaft einen hinsichtlich der Lageregelung und/oder Zugkraftregelung optimierten Soll-Schlupf (P) für die Schlupfregelung zu ermitteln und den Heckkraftheber (2) auf den optimierten Soll-Schlupf (P) zu regeln.

## Claims

1. A method for regulating a rear power lift (2) of an agricultural working machine (1) in an agricultural combination (5), wherein the agricultural combination (5) has an agricultural working machine (1) and an agricultural attachment (3), wherein the agricultural attachment (3) is connected to the agricultural working machine (1) via a rear power lift (2) of the agricultural working machine (1), wherein the agricultural working machine (1) has a driver assistance system (6) which regulates machine parameters of the rear power lift (2),
wherein the driver assistance system (6) regulates the machine parameters of the rear power lift (2) by means of a position regulation and/or a tractive force regulation and/or a working depth regulation, on which a slip regulation is superimposed,
**characterized in that**
the driver assistance system (6) determines, as a function of at least one existing ground property and at least one existing tyre property, a slip setpoint (P) for the slip regulation which is optimised with regard to the position regulation and/or tractive force regulation and/or working depth regulation and regulates the rear power lift (2) towards the optimised slip setpoint (P).

2. The method according to claim 1, **characterized in that** the agricultural combination (5) has a sensor (9) for detecting at least one of the existing ground properties, preferably **in that** the sensor (9) detects a gradient of the ground and/or a surface property of the ground, in particular crumbling of the ground and/or levelling of the ground.

3. The method according to claim 1 or claim 2, **characterized in that** at least one of the ground properties is input by a user (8) and/or is stored in a database (DB), preferably **in that** the at least one ground property is stored in the database (DB) in a location-dependent manner, more preferably **in that** the at least one ground property in the database (DB) comprises a compaction.

4. The method according to one of the preceding claims, **characterized in that** the agricultural combination (5) has a sensor (9) for detecting at least one existing tyre property, and/or **in that** at least one of the at least one tyre properties is input by the user (8) and/or is stored in the database (DB), preferably **in that** the at least one tyre property is a weight of the agricultural working machine (1), in particular an axle loading and/or an axle ballast, and/or a tyre size and/or a rolling radius of the tyre and/or a tyre pressure.

5. The method according to one of the preceding claims, **characterized in that** the driver assistance system (6) regulates, as the machine parameter, a lifting gear position of the upper link (10) and/or of one of the lower links (11) or of the lower links (11) and/or a lifting gear force of one of the lower links (11) or of the lower links (11) and/or a length of the upper link (10) and/or of one of the lower links (11) or of the lower links (11) and/or of a lifting strut and/or an upper link force (10) on the rear power lift (2).

6. The method according to one of the preceding claims, **characterized in that** the driver assistance system (6) determines the slip setpoint (P) in order to obtain a maximum motive force efficiency or a maximum motive force coefficient or in view of obtaining an optimised combination of motive force efficiency and motive force coefficient.

7. The method according to one of the preceding claims, **characterized in that**, on the basis of the at least one existing ground property and the at least one existing tyre property, the driver assistance system (6) temporarily regulates the rear power lift (2) by means of a position regulation without slip regulation and/or a tractive force regulation without slip regulation and/or a combined regulation of position regulation and tractive force regulation without slip regulation and preferably determines an optimised combined factor of the combined regulation therefor.

8. The method according to one of the preceding claims, **characterized in that**, on the basis of the at least one existing ground property and the at least one existing tyre property and/or the slip setpoint, the driver assistance system (6) determines, in an optimised manner, a setting of a combined factor of a combined regulation of position regulation and tractive force regulation and regulates the rear power lift (2) on the basis thereof, preferably **in that** the driver assistance system (6) determines the combined factor and preferably the slip setpoint (P) in order to obtain a specification, in particular a user specification, more preferably **in that** the specification is a specified working depth (7) or a specified driving speed or a specified tractive force.

9. The method according to one of the preceding claims, **characterized in that**, in a characteristic diagram routine, for given ground properties and tyre properties, the driver assistance system (6) varies settings of the rear power lift (2) in order to determine dependencies between the ground properties and tyre properties and the slip, in particular in the form of a characteristic diagram, and then to determine the slip setpoint (P) on the basis thereof.

10. The method according to one of the preceding claims, **characterized in that** the agricultural attachment (3) has a sensor (9) for determining an absolute working depth (7) for the working depth regulation.

11. The method according to one of the preceding claims, **characterized in that** the driver assistance system (6) furthermore controls or regulates machine parameters of the attachment (3) as a function of the slip setpoint (P) and/or determines the slip setpoint (P) as a function of the machine parameters, preferably **in that** the driver assistance system (6) controls or regulates a cutting width and/or a working depth (7) of a plough (4) as a function of the slip setpoint (P).

12. The method according to one of the preceding claims, **characterized in that** the driver assistance system (6) furthermore determines the slip setpoint (P) as a function of a total weight of the agricultural combination (5) and of an inclination of the ground and/or of the agricultural combination (5).

13. An agricultural combination, wherein the agricultural combination (5) has an agricultural working machine (1) and an agricultural attachment (3), wherein the agricultural attachment (3) is connected to the agricultural working machine (1) via a rear power lift (2) of the agricultural working machine (1),
wherein the agricultural working machine (1) has a driver assistance system (6) which is configured to regulate machine parameters of the rear power lift (2),
wherein the driver assistance system (6) is configured to regulate the machine parameters of the rear power lift (2) by means of a position regulation and/or a tractive force regulation, on which a slip regulation is superimposed,
**characterized in that**
the driver assistance system (6) is further configured to determine, as a function of at least one existing ground property and at least one existing tyre property, a slip setpoint (P) for the slip regulation which is optimised with regard to the position regulation and/or tractive force regulation and to regulate the rear power lift (2) towards the optimised slip setpoint (P).

## Revendications

1. Procédé de réglage d'un relevage arrière (2) d'une machine agricole (1) dans un attelage agricole (5), où l'attelage agricole (5) comprend une machine agricole (1) et un outil agricole attelé (3), l'outil agricole attelé (3) étant relié à la machine agricole (1) par un relevage arrière (2) de la machine agricole (1),
la machine agricole (1) présentant un système d'assistance au conducteur (6) qui règle des paramètres machine du relevage arrière (2),
le système d'assistance au conducteur (6) réglant les paramètres machine du relevage arrière (2) au moyen d'un réglage de position et/ou d'un réglage de force de traction et/ou d'un réglage de profondeur de travail auquel est superposé un réglage de patinage,
**caractérisé en ce que**
le système d'assistance au conducteur (6) détermine, en fonction d'au moins une propriété de sol disponible et d'au moins une caractéristique de pneu disponible, un patinage de consigne (P) pour le réglage de patinage, qui est optimisé en ce qui concerne le réglage de position et/ou le réglage de force de traction et/ou le réglage de profondeur de travail, et règle le relevage arrière (2) au patinage de consigne (P) optimisé.

2. Procédé selon la revendication 1, **caractérisé en ce que** l'attelage agricole (5) présente un capteur (9) destiné à la détection d'au moins une des propriétés de sol disponibles, de préférence **en ce que** le capteur (9) détecte une pente du sol et/ou une propriété de surface du sol, en particulier un émiettement du sol et/ou un nivellement du sol.

3. Procédé selon la revendication 1 ou 2, **caractérisé en ce qu'**u moins une des propriétés du sol est saisie par un utilisateur (8) et/ou est enregistrée dans une base de données (DB), de préférence **en ce que** la propriété du sol, au nombre d'au moins une, est enregistrée dans la base de données (DB) en fonction du lieu, et en outre de préférence **en ce que** la propriété du sol, au nombre d'au moins une, de la base de données (DB) comprend un compactage.

4. Procédé selon une des revendications précédentes, **caractérisé en ce que** l'attelage agricole (5) présente un capteur (9) destiné à la détection d'au moins une caractéristique de pneu disponible, et/ou **en ce qu'**au moins une des caractéristiques de pneu, au nombre d'au moins une, est saisie par l'utilisateur (8) et/ou est enregistrée dans la base de données (DB), de préférence **en ce que** la caractéristique de pneu, au nombre d'au moins une, comprend un poids de la machine agricole (1), en particulier une charge d'essieu et/ou un lestage d'essieu et/ou une dimension de pneu et/ou un rayon de roulement du pneu et/ou une pression de pneu.

5. Procédé selon une des revendications précédentes, **caractérisé en ce que** le système d'assistance au conducteur (6) règle sur le relevage arrière (2), en tant que paramètre machine, une position du mécanisme de relevage du bras supérieur (10) et/ou d'un ou des bras inférieurs (11) et/ou une force de mécanisme de relevage d'un ou des bras inférieurs (11) et/ou une longueur du bras supérieur (10) et/ou d'un ou des bras inférieurs (11) et/ou d'une chandelle de relevage et/ou une force de bras supérieur (10).

6. Procédé selon une des revendications précédentes, **caractérisé en ce que** le système d'assistance au conducteur (6) détermine le patinage de consigne (P) en vue d'atteindre une efficacité maximale de force motrice ou un coefficient maximal de force motrice, ou par rapport à une combinaison optimisée d'efficacité de force motrice et de coefficient de force motrice.

7. Procédé selon une des revendications précédentes, **caractérisé en ce que** le système d'assistance au conducteur (6), sur la base de la propriété de sol disponible, au nombre d'au moins une, et de la caractéristique de pneu disponible, au nombre d'au moins une, règle temporairement le relevage arrière (2) au moyen d'un réglage de position sans réglage de patinage et/ou d'un réglage de force de traction sans réglage de patinage et/ou d'un réglage mixte de réglage de position et de réglage de force de traction sans réglage de patinage, et détermine de préférence à cet effet un facteur de mélange optimisé du réglage mixte.

8. Procédé selon une des revendications précédentes, **caractérisé en ce que** le système d'assistance au conducteur (6), sur la base de la propriété de sol disponible, au nombre d'au moins une, et de la caractéristique de pneu disponible, au nombre d'au moins une, et/ou du patinage de consigne, détermine de manière optimisée un réglage d'un facteur de mélange d'un réglage mixte de réglage de position et de réglage de force de traction et règle le relevage arrière (2) sur cette base, de préférence **en ce que** le système d'assistance au conducteur (6) détermine le facteur de mélange et de préférence le patinage de consigne (P) en vue d'atteindre une consigne, notamment une consigne d'utilisateur, et en outre de préférence **en ce que** la consigne est une profondeur de travail (7) prédéfinie ou un vitesse de déplacement prédéfinie ou une force de traction prédéfinie.

9. Procédé selon une des revendications précédentes, **caractérisé en ce que** le système d'assistance au conducteur (6), dans une routine de diagramme caractéristique avec des propriétés de sol et des caractéristiques de pneu données, fait varier des réglages du relevage arrière (2) aux fins de déterminer des interdépendances entre les propriétés du sol et les caractéristiques de pneu et le patinage, notamment sous la forme d'un diagramme caractéristique, et de déterminer ensuite le patinage de consigne (P) sur cette base.

10. Procédé selon une des revendications précédentes, **caractérisé en ce que** l'outil agricole attelé (3) présente un capteur (9) destiné à déterminer une profondeur de travail (7) absolue pour le réglage de la profondeur de travail.

11. Procédé selon une des revendications précédentes, **caractérisé en ce que** le système d'assistance au conducteur (6) contrôle ou règle en outre des paramètres machine de l'outil attelé (3), en fonction du patinage de consigne (P), et/ou détermine le patinage de consigne (P) en fonction des paramètres machine, de préférence **en ce que** le système d'assistance au conducteur (6) contrôle ou règle une largeur de coupe et/ou une profondeur de travail (7) d'une charrue (4), en fonction du patinage de consigne (P).

12. Procédé selon une des revendications précédentes, **caractérisé en ce que** le système d'assistance au conducteur (6) détermine le patinage de consigne (P) en outre en fonction d'un poids total de l'attelage agricole (5) et d'une inclinaison du sol et/ou de l'attelage agricole (5).

13. Attelage agricole, où l'attelage agricole (5) comprend une machine agricole (1) et un outil agricole attelé (3), l'outil agricole attelé (3) étant relié à la machine agricole (1) par un relevage arrière (2) de la machine agricole (1),
la machine agricole (1) présentant un système d'assistance au conducteur (6) qui est conçu pour régler des paramètres machine du relevage arrière (2),
le système d'assistance au conducteur (6) étant conçu pour régler les paramètres machine du relevage arrière (2) au moyen d'un réglage de position et/ou d'un réglage de force de traction auquel ou auxquels est superposé un réglage de patinage,
**caractérisé en ce que**
le système d'assistance au conducteur (6) est en outre conçu pour déterminer, en fonction d'au moins une propriété de sol disponible et d'au moins une caractéristique de pneu disponible, un patinage de consigne (P) pour le réglage de patinage qui est optimisé en ce qui concerne le réglage de position et/ou le réglage de force de traction, et pour régler le relevage arrière (2) sur le patinage de consigne (P) optimisé.
